# DEMANDE DE BREVET EUROPEEN

(11) **EP 4 834 812 A1**
(43) Date de publication de la demande: **04.11.2026**
(21) Numéro de dépôt: 26171016.4
(22) Date de dépôt: 07.04.2026
(51) Int. Cl.: B65H 35/00, F24D 3/14

(54) **APPLICATEUR DE RUBAN ADHÉSIF**

(30) Priorité: 28.04.2025 FR 2504458
(71) Demandeur: THERMACOME, 50240 Saint-James (FR)
(72) Inventeur: TANSORIER, Laurent, 50240 Saint-James (FR); DERENNES, Alan, 50240 Saint-James (FR); KIEFFER, Florent, 50240 Saint-James (FR)
(74) Mandataire: Corret, Hélène

(57) **Abrégé**

L'invention concerne un applicateur (4) de ruban adhésif conçu pour la fixation d'un tube (30) sur une surface de destination, comprenant :
- Un support,
- Un dévidoir (42) de ruban adhésif, destiné à recevoir en utilisation un rouleau de ruban adhésif,
caractérisé en ce qu'il comprend une tête d'application (41) de ruban adhésif, montée mobile en rotation sur ledit support autour d'un axe de rotation (410),ladite tête d'application comportant une partie centrale supportant, sur sa périphérie, une pluralité de cylindres, chaque cylindre étant lui-même monté mobile en rotation sur ladite partie centrale, autour d'un axe de rotation parallèle à l'axe de rotation (410) de la tête d'application (41) et en ce que ledit dévidoir est monté mobile en rotation sur ledit support autour d'un axe (420) parallèle à l'axe de rotation (410) de la tête d'application (41).

## Description

La présente invention concerne un applicateur de ruban adhésif conçu pour la fixation d'un tube sur une surface de destination.

Il peut notamment être utilisé lors de la réalisation d'un plancher chauffant et/ou rafraîchissant pour maintenir sur le sol des tubes destinés à être parcourus en utilisation par un fluide.

Pour faciliter leur mise en place, ces tubes sont déjà préformés et se présentent sous la forme de nappe ou de trame. On peut notamment se référer au document FR2993637 qui décrit un ensemble de conduite de circulation de fluide pour une structure d'échange thermique comprenant un tube flexible courbé en alternance dans un premier sens et dans un deuxième sens, de manière à présenter une forme en épingles.

Ces nappes ou trames ne sont pas planes et ont tendance à se déformer. Il est donc nécessaire de les fixer au sol avant qu'une chape d'enrobage (ciment ou anhydrite par exemple) ne soit coulée, afin d'éviter que les tubes ne ressortent de la chape ou que le pas entre les tubes ne soit pas maintenu, ce qui nuirait à l'homogénéité du chauffage et/ou du rafraîchissement.

Le même problème existe avec un tube qui serait déroulé directement de son support, du fait de sa mémoire de forme.

Dans un bâtiment neuf, une couche de matériau isolant, comme du polystyrène ou du polyuréthane, est prévue. La nappe ou la trame de tubes peut ainsi être déposée sur cette couche et maintenue sur elle par des agrafes qui pénètrent facilement dans la couche de matériau isolant.

Dans un bâtiment en cours de rénovation, cette couche de matériau isolant n'est généralement pas prévue, car le bâtiment ne dispose pas de l'espace nécessaire. La nappe ou la trame de tubes est alors directement disposée sur le sol et des agrafes ne peuvent pas être utilisées pour assurer leur maintien sur le sol.

Une autre contrainte de ce type de bâtiments est l'état du sol et son absence de propreté par rapport à un bâtiment neuf.

On connait un dispositif pour fixer des tubes sur une surface à l'aide d'un ruban adhésif, décrit par le document DE102012103325. Ce dispositif comporte un support et un dévidoir de ruban adhésif et permet d'appliquer une portion de ruban adhésif sur un tube grâce à un poinçon. Les tubes sont donc fixés un par un.

L'invention a pour objectif de proposer un dispositif de fixation de tubes que ces tubes soient destinés à être parcourus par un fluide, des câbles électriques ou autre, le dispositif étant utilisable dans tous les bâtiments, neufs ou en cours de rénovation, et permettant une fixation simple et rapide des tubes.

Après de nombreux essais, les inventeurs sont arrivés à la conclusion que cette fixation pouvait avantageusement être obtenue grâce à un applicateur particulier de ruban adhésif.

L'invention concerne ainsi un applicateur de ruban adhésif conçu pour la fixation d'un tube sur une surface de destination, comprenant :
- un support,
- un dévidoir de ruban adhésif, destiné à recevoir en utilisation un rouleau de ruban adhésif,
caractérisé en ce qu'il comprend en outre une tête d'application de ruban adhésif, montée mobile en rotation sur ledit support autour d'un axe de rotation, ladite tête d'application comportant une partie centrale supportant, sur sa périphérie, une pluralité de cylindres, chaque cylindre étant lui-même monté mobile en rotation sur ladite partie centrale, autour d'un axe de rotation parallèle à l'axe de rotation de la tête d'application, ledit dévidoir étant monté mobile en rotation sur ledit support autour d'un axe parallèle à l'axe de rotation de la tête d'application.

Selon des modes de réalisation particuliers, on a de plus recours à l'une et/ou l'autre des dispositions suivantes :
- Le nombre de cylindres est égal à 8.
- La tête d'application comporte, entre deux cylindres adjacents, une zone en creux de forme arrondie, apte à recevoir en utilisation une partie d'un tube et à venir en contact avec elle.
- L'applicateur comprend également un galet de tension, monté mobile en rotation sur ledit support, entre le dévidoir de ruban adhésif et la tête d'application, autour d'un axe de rotation parallèle à l'axe de rotation du dévidoir et à celui de la tête d'application, les trois axes formant un triangle.
- Ledit support présente une forme courbée, facilitant les transferts de force en utilisation.
- Le support comprend des moyens pour ajuster la position du dévidoir de ruban adhésif par rapport à la tête d'application.
- Le galet de tension est fixé sur le support au moyen d'une première et d'une deuxième bride, la deuxième bride permettant d'ajuster la position du galet de tension par rapport à la tête d'application.
- Lesdits cylindres sont recouverts d'une couche de protection.

L'applicateur peut également être utilisé en association avec une rallonge ou manche pour permettre à l'utilisateur de rester debout, ou encore une poignée, destiné(e) à être raccordé(e) à une extrémité libre du support.

L'invention concerne également un procédé de fixation de tubes sur une surface de destination à l'aide d'un applicateur de ruban adhésif selon l'invention, les tubes formant une nappe ou une trame, comprenant les étapes suivantes :
- placer un rouleau de ruban adhésif sur le dérouleur,
- dérouler le ruban adhésif pour qu'il vienne en contact avec la tête d'application,
- déplacer l'applicateur sur la surface de destination selon une ligne transversale aux tubes,
- répéter l'étape précédente jusqu'à la fixation des tubes sur la surface de destination.

Ce procédé peut être mis en œuvre en poussant ou en tirant sur l'applicateur ou son manche.

L'invention sera mieux comprise et d'autres buts, avantages et caractéristiques de celle-ci apparaitront plus clairement à la lecture de la description qui suit et qui est faite au regard des dessins annexés sur lesquels :
[Fig.1] est une vue en perspective illustrant une nappe de tubes disposée sur le sol d'une pièce d'un bâtiment et des lignes parallèles de ruban adhésif,
[Fig.2] est une vue générale en plan d'un exemple de réalisation de l'applicateur selon l'invention,
[Fig.3] est une vue en perspective partielle illustrant l'applicateur de la [Fig.2], en cours de fonctionnement,
[Fig.4] est une première vue latérale de l'applicateur illustré à la [Fig.2], avec un rouleau de ruban adhésif,
[Fig.5] est une deuxième vue latérale de l'applicateur illustré à la [Fig.4], opposée à la première,
[Fig.6] est une vue en perspective du carrousel de l'applicateur selon l'invention,
[Fig.7] à [Fig.10] illustrent différentes étapes de franchissement d'un tube par l'applicateur selon l'invention.

Les éléments communs aux différentes figures seront désignés par les mêmes références.

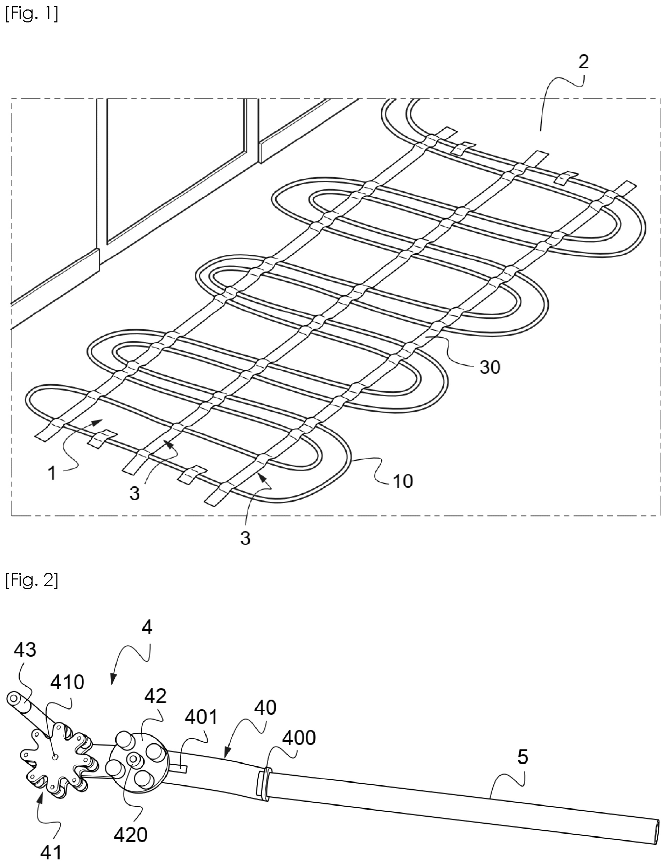

La figure 1 illustre une utilisation de l'applicateur selon l'invention. Une nappe 1 de tubes 10 est disposée sur le sol 2 d'une pièce d'un bâtiment. Elle est maintenue sur le sol grâce à des lignes parallèles 3 de ruban adhésif 30 qui ont été déposées avec cet applicateur.

Une difficulté rencontrée dans le dépôt du ruban adhésif est l'obstacle que constituent les tubes, lorsque l'applicateur est déplacé de façon continue en travers de la nappe de tubes, cet obstacle devant être facilement passé avec l'applicateur pour que la dépose du ruban soit rapide et aisée et permette la fixation de plusieurs tubes.

Par ailleurs, la zone d'adhésion du ruban entre deux tubes doit être la plus importante possible, afin d'assurer une fixation efficace et donc de limiter le nombre de lignes de ruban.

Cette deuxième difficulté entraîne la nécessité d'épouser au plus proche la forme des tubes franchis.

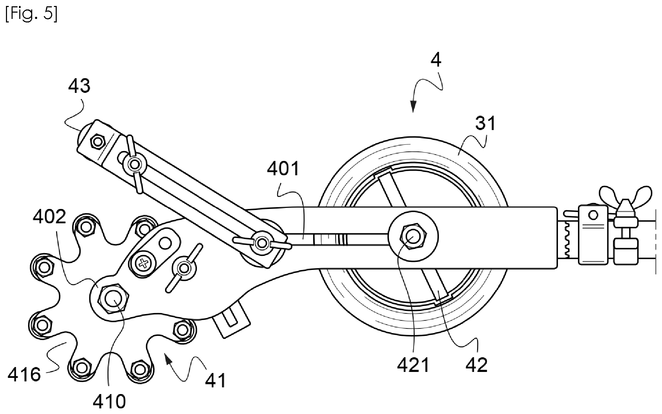

En référence aux [Fig.2] à [Fig.5], l'applicateur 4 selon l'invention comprend un support 40 pour une tête d'application 41 de ruban adhésif, un dévidoir à ruban adhésif 42, destiné à supporter un rouleau 31 de ruban adhésif, et un galet de tension 43.

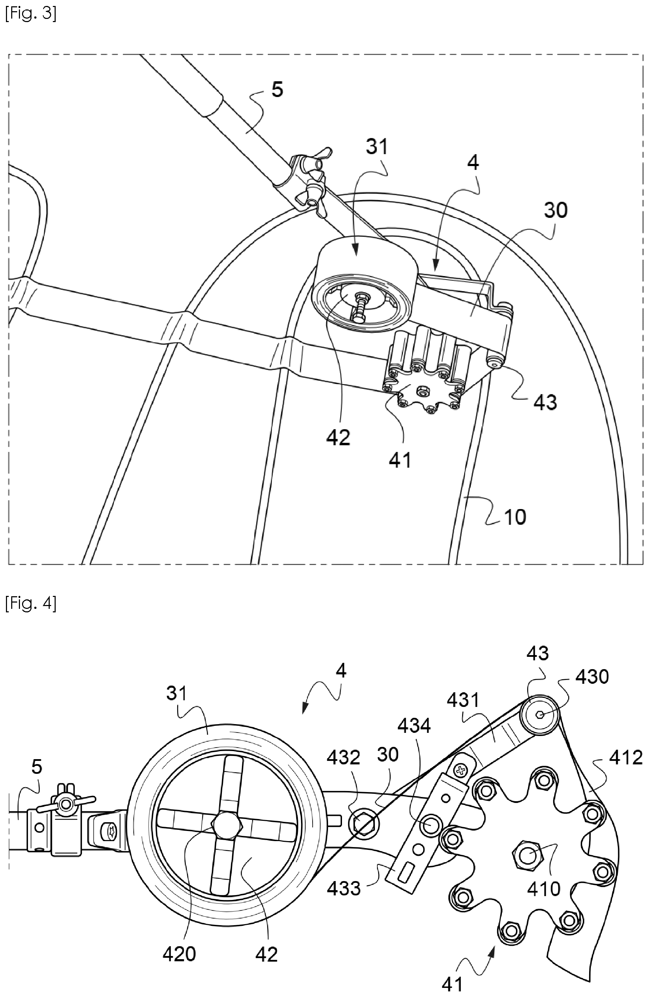

Dans l'exemple de réalisation illustré sur les figures, le support 40 est raccordé à un manche 5, fixé à une extrémité 400 du support opposée à la tête 41, par exemple à force ([Fig.2]) ou par un collier de serrage ([Fig.3], [Fig.4], [Fig.5]). Ce manche permet une utilisation en position debout de l'applicateur.

L'invention n'est cependant pas limitée à cette utilisation. L'applicateur peut également être utilisé avec une simple poignée fixée à l'extrémité 400 du support.

Le support est de préférence réalisé en une matière à la fois rigide et légère, typiquement en métal, par exemple en acier.

Dans cet exemple, le support 4 présente la forme générale d'une lame courbée, choisie pour contribuer également à un transfert efficace des efforts, afin de faciliter l'avancée de l'applicateur en utilisation. L'invention n'est cependant pas limitée à ce mode de réalisation et le support pourrait prendre d'autres formes adaptées, par exemple une forme plane ou encore une forme de houe avec un angle d'au plus 90° avec le manche.

La tête d'application 41 et le dévidoir à ruban adhésif 42 sont l'un et l'autre montés mobiles en rotation sur le support 40, autour d'un axe 410, 420, les deux axes 410 et 420 étant parallèles.

L'axe 410 est situé à proximité de l'extrémité libre 402 du support 40, opposée à l'extrémité 400, destinée à être raccordée au manche 5 ou à une poignée, tandis que l'axe 420 est situé entre l'axe 410 et l'extrémité 400 et à une distance non nulle de cet axe 410.

De plus, pour faciliter l'alimentation en ruban adhésif de la tête 41, les centres géométriques de la tête et du dévidoir sont alignés. Une ligne droite reliant ces deux centres est perpendiculaire aux deux axes 410 et 420.

En ce qui concerne maintenant le dévidoir 42, les figures montrent que le support 40 comporte une fente 401. La position de fixation du dévidoir 42 sur le support peut être choisie le long de cette fente, la fixation étant assurée par un écrou 421. Cette fente constitue ainsi un mécanisme d'ajustement de la position du dévidoir 42 par rapport au support 4, lequel pourrait prendre d'autres formes.

Ainsi, la distance entre la tête d'application 41 et le dévidoir 42 peut être ajustée par l'utilisateur mais elle reste fixe en cours d'utilisation. Cela permet d'utiliser l'applicateur selon l'invention avec des rouleaux 31 de ruban adhésif de taille variable.

De préférence, l'axe 410 de la tête est monté sur le support 40 par l'intermédiaire d'un support antivibratoire également dénommé silentbloc de façon à faciliter le passage de l'applicateur sur des tubes 10.

Le galet de tension 43 est monté de façon fixe sur le support 40 grâce à une première bride 431 fixée au support par des moyens de fixation 432 présents entre la fente 401 et l'axe 410 de la tête d'application 41 et une deuxième bride 433 fixée à la fois sur la première bride 431 et le support 40, cette deuxième bride étant positionnée entre les moyens de fixation 432 et l'axe 410 de la tête 41.

La première bride 431 est inclinée par rapport au support 40 et forme un angle non nul avec le support 40.

Le galet 43 est monté mobile en rotation sur la bride 431 autour d'un axe 430, parallèle aux deux axes 410 et 420, de telle sorte que les trois axes 410, 420 et 430 sont parallèles entre eux et forment (vus de face ou encore dans le plan de la feuille) un triangle.

De préférence, l'inclinaison de la deuxième bride 433 par rapport au support 40 peut être ajustée par l'utilisateur, grâce aux moyens de fixation 434 de la deuxième bride sur le support, ce qui permet également de régler l'inclinaison de la première bride 431 par rapport au support 40.

De façon classique, le galet tendeur 43 facilite l'alimentation du ruban adhésif 30 sur la tête d'application 41 en réduisant l'effort de déroulage tout en maintenant la tension du ruban 30. Cependant, l'applicateur selon l'invention pourrait fonctionner en son absence.

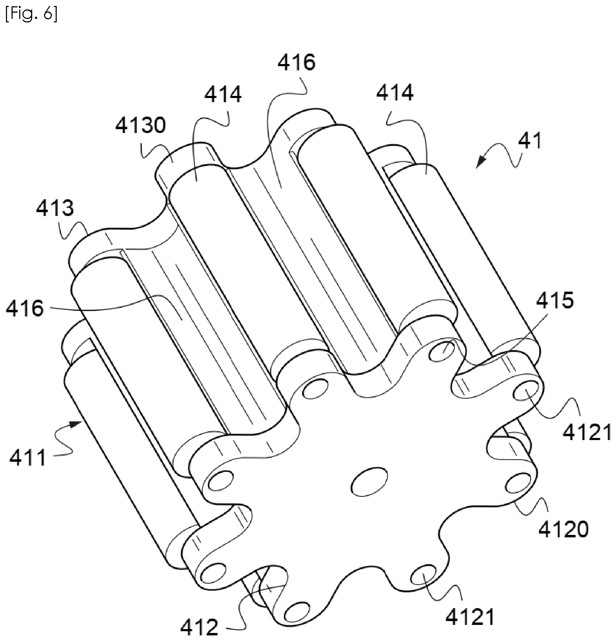

La tête d'application 41 va maintenant être décrite plus en détail en référence à la [Fig.4] et à la [Fig.6].

Elle comporte une partie centrale 411 de forme générale cylindrique, un flasque 412, 413 étant fixé sur chaque face de la partie centrale.

La partie centrale 411 supporte, sur sa circonférence, une série de cylindres 414, chacun d'eux étant monté mobile en rotation autour d'un axe 415 parallèle à l'axe de rotation 410 de la tête d'application 41.

Dans l'exemple de réalisation illustré sur les figures, chaque flasque 412, 413 présente sur sa circonférence une série de lobes 4120, 4130, ici 8 lobes.

Chaque lobe est percé d'une ouverture (seules les ouvertures 4121 pratiquées dans le flasque 412 sont visibles sur les figures), ces ouvertures servant de support à l'axe 415 de rotation de chaque cylindre 414. Ainsi, chaque flasque épouse la forme de la partie centrale 411, équipée des cylindres 414.

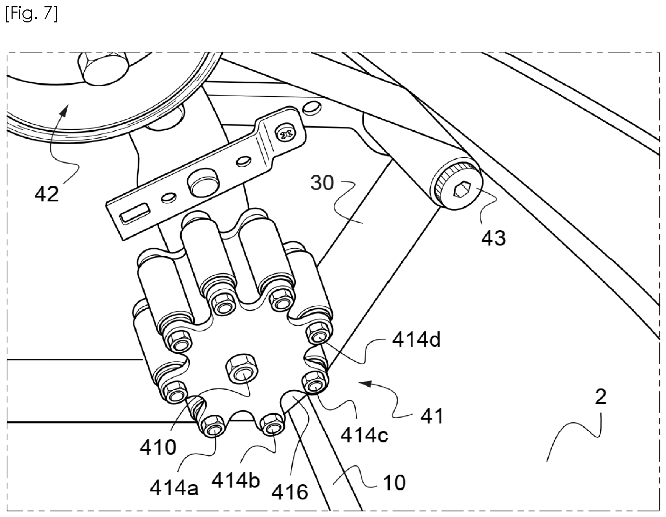

Entre chaque cylindre 414 et donc entre deux lobes adjacents d'un même flasque, la partie centrale 411 présente une zone en creux 416 de forme incurvée, apte à recevoir une partie d'un tube et à venir en contact étroit avec elle pour l'envelopper et épouser sa forme, comme cela sera expliqué en référence aux figures 7 à 10. Elle présente une forme générale de demie-coque longitudinale.

De préférence, les cylindres 414 sont revêtus d'une couche protectrice. Cette couche peut être réalisée en une matière souple, par exemple en caoutchouc, de façon à épouser les déformations et apporter du confort à l'utilisateur lors de la dépose du ruban adhésif sur le sol.

A titre d'exemple, le diamètre de la partie centrale de la tête d'application est compris entre 90 et 120 mm, le diamètre des cylindres est compris entre 12,5 et 22 mm, le diamètre du dévidoir est compris entre 75 et 78 mm et celui du galet entre 15 et 35 mm.

La [Fig.3] montre l'applicateur selon l'invention en cours d'utilisation. Il est fixé au manche 5 et l'utilisateur pousse l'applicateur vers l'avant, dans le sens de la marche. Le ruban adhésif 30 est déroulé depuis le rouleau 31 placé sur le dévidoir 42, passe sur le galet 43 puis sous la tête d'application 41 qui l'applique à la fois sur le sol 2 et sur les tubes 10.

L'utilisateur pourrait également tirer l'applicateur derrière lui, la position du galet de tension devant alors être inversée par rapport à celle illustrée précédemment.

Les figures 7 à 10 illustrent le processus de franchissement d'un tube par l'applicateur selon l'invention, alors que l'utilisateur pousse l'applicateur vers l'avant, dans le sens de la marche. Le mouvement va donc de la gauche vers la droite des figures.

Le franchissement du tube 10 est facilité grâce à la structure de la tête d'application 41 qui vient d'être décrite.

Pour faciliter la compréhension du mouvement de la tête d'application 41 et de la coopération entre les cylindres 414 et le tube 10, quatre d'entre eux sont numérotés de 414a à 414 d.

Sur la [Fig.7] qui représente la tête d'application 41 au plus près du tube 10 mais avant le franchissement du tube, le cylindre 414a correspond au cylindre en contact avec le sol et le plus à gauche sur la figure (ou encore le plus éloigné du tube 10). Les trois autres cylindres 414b, 414c et 414d sont ensuite identifiés de façon incrémentale, suivant le sens anti-horaire, en partant du cylindre 414a.

Pour faciliter les explications, on décrira les cylindres comme étant « en contact avec le sol », bien qu'en réalité le ruban adhésif 30 est situé entre les cylindres et le sol 2 et qu'il n'y a donc pas de contact direct entre les cylindres et le sol. De même, on décrira la tête d'application comme étant « en contact avec une partie du tube », bien qu'en réalité le ruban adhésif 30 est situé entre la tête d'application et le tube.

Comme l'illustre la [Fig.7], avant le franchissement du tube 10, les cylindres 414a et 414b, situés à gauche du tube 10, sont en contact avec le sol. En l'absence de résistance, l'effort exercé par l'utilisateur est transmis à travers la partie centrale 411 de la tête qui reste fixe autour de son axe, et atteint les cylindres 414a et 414b. Ceux-ci peuvent rouler librement autour de leur axe, ce qui assure l'application du ruban adhésif 30 au sol.

En arrivant au niveau du tube 10 à franchir, le cylindre 414b bute contre lui. Les cylindres 414a et 414b sont alors bloqués et ne peuvent plus rouler.

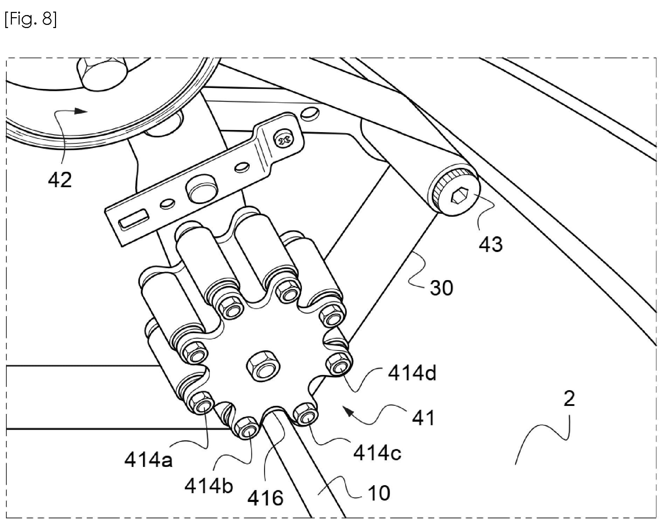

Ainsi, l'effort de poussée exercé par l'utilisateur sur l'applicateur 4 n'est plus utilisé par les cylindres 414a et 414b qui sont bloqués. Comme l'illustre la [Fig.8], cela a pour conséquence d'entrainer la tête d'application 41 autour de son axe 410. Le cylindre 414a se soulève et n'est plus en contact avec le sol, tandis que le cylindre 414c descend. Le cylindre 414b est maintenant le seul cylindre en contact avec le sol, en butée contre le tube 10 à franchir. Le ruban adhésif 30 présent entre les cylindres 414b et 414c enveloppe alors au plus près possible le tube 10 à franchir qui est reçu dans la zone en creux 416 définie entre les deux cylindres.

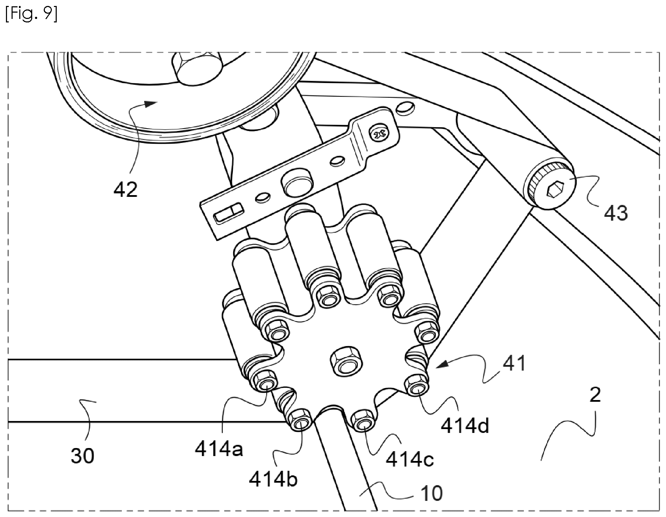

A l'étape suivante illustrée à la [Fig.9], l'utilisateur continuant à exercer un effort de poussée, le cylindre 414c entre en contact avec le sol, de l'autre côté du tube 10 à franchir. Le cylindre 414b se soulève et reste en contact avec le tube tandis que le cylindre 414d descend. Le cylindre 414c est maintenant le seul cylindre en contact avec le sol.

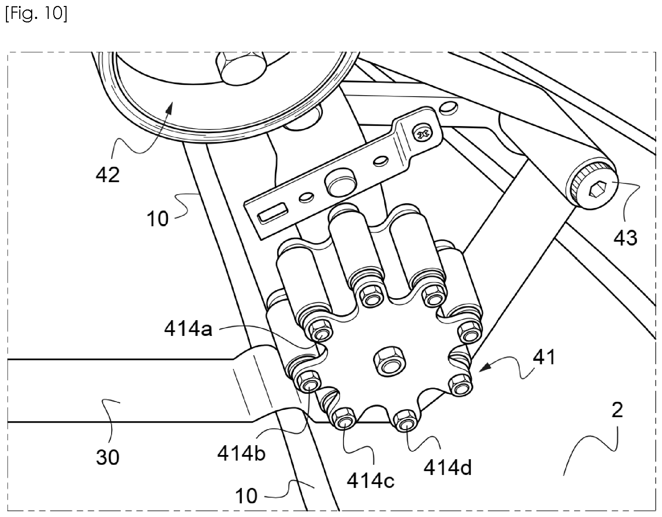

La [Fig.10] monte que le cylindre 414d entre ensuite en contact avec le sol 2. Le cylindre 414b n'est plus en contact avec le tube, les cylindres 414c et 414d étant alors en contact avec le sol, de l'autre côté du tube 10.

Les cylindres 414c et 414d n'étant pas bloqués, l'effort exercé par utilisateur est donc de nouveau transmis jusqu'à la partie centrale de la tête d'application. Le mouvement peut alors reprendre, les cylindres roulant librement autour de leur axe, ce qui applique le ruban adhésif au sol, jusqu'à ce que la tête d'application vienne de nouveau en butée contre un tube.

Les explications qui précèdent montrent que l'applicateur de ruban selon l'invention permet de franchir facilement un tube et également de coller au sol un pourcentage important du ruban, compris entre 80 et 90 %. Ceci est dû au fait que la tête d'application est conçue pour s'approcher au plus près du tube à franchir, tout en permettant le franchissement du tube, et d'envelopper une grande partie du tube avec du ruban adhésif, grâce à la présence de zones incurvées qui épousent la forme du tube et plaquent le ruban adhésif contre le tube.

Ainsi, l'applicateur selon l'invention est d'une utilisation facile et ne demande pas d'effort important à l'utilisateur. L'application du ruban adhésif est réalisée de façon continue sans qu'il soit nécessaire de couper le ruban entre deux tubes et plusieurs tubes peuvent donc être fixés au sol dans le même mouvement de tirage ou de poussée de l'utilisateur.

L'applicateur selon l'invention permet également d'utiliser une quantité réduite de ruban adhésif puisque pratiquement toute la surface du ruban sert à la fixation de la nappe de tubes sur le sol et que les tubes franchis sont eux-mêmes bloqués par du ruban adhésif.

Dans l'exemple illustré sur les figures, la tête d'application supporte 8 cylindres. L'invention n'est cependant pas limitée à cet exemple et la tête d'application pourrait comporter au moins 4 cylindres. De façon générale, une tête d'application comportant plus de 4 cylindres permet de franchir plus facilement un tube et de mieux l'envelopper avec le ruban adhésif. La tête pourrait ainsi comporter par exemple 5, 6 ou 7 cylindres ou encore plus de 8 cylindres.

De façon générale, l'invention n'est pas limitée à l'exemple décrit et inclut d'autres variantes concernant par exemple l'introduction de moyens de découpe du ruban adhésif, en aval de la tête d'application.

## Revendications

1. Applicateur (4) de ruban adhésif (30) conçu pour la fixation d'un tube (10) sur une surface de destination (2), comprenant :
- un support (40),
- un dévidoir (42) de ruban adhésif, destiné à recevoir en utilisation un rouleau de ruban adhésif,
**caractérisé en ce qu'**il comprend en outre :
une tête d'application (41) de ruban adhésif, montée mobile en rotation sur ledit support autour d'un axe de rotation (410), ladite tête d'application comportant une partie centrale (411) supportant, sur sa périphérie, une pluralité de cylindres (414), chaque cylindre étant lui-même monté mobile en rotation sur ladite partie centrale, autour d'un axe de rotation (415) parallèle à l'axe de rotation (410) de la tête d'application (41) et **en ce que** ledit dévidoir est monté mobile en rotation sur ledit support (40) autour d'un axe (420) parallèle à l'axe de rotation (410) de la tête d'application (41).

2. Applicateur de ruban adhésif suivant la revendication 1, dans lequel le nombre de cylindres est égal à 8.

3. Applicateur de ruban adhésif suivant la revendication 1 ou 2, dans lequel la tête d'application (41) comporte, entre deux cylindres (414) adjacents, une zone en creux (416) de forme arrondie, apte à recevoir en utilisation une partie d'un tube (30) et à venir en contact avec elle.

4. Applicateur de ruban adhésif suivant l'une des revendications 1 à 3, comprenant également un galet de tension (43), monté mobile en rotation sur ledit support (40), entre le dévidoir (42) de ruban adhésif et la tête d'application (41), autour d'un axe de rotation (430) parallèle à l'axe de rotation du dévidoir (420) et à celui de la tête d'application (410), les trois axes (410, 420, 430) formant un triangle.

5. Applicateur de ruban adhésif suivant l'une quelconque des revendications précédentes, dans lequel ledit support (40) présente une forme courbée.

6. Applicateur de ruban adhésif suivant l'une quelconque des revendications précédentes, dans lequel le support (40) comprend des moyens (401) pour ajuster la position du dévidoir de ruban adhésif (42) par rapport à la tête d'application (41).

7. Applicateur de ruban adhésif suivant la revendication 4, dans lequel le galet de tension (43) est fixé sur le support (40) au moyen d'une première et d'une deuxième bride (431, 433), la deuxième bride (433) permettant d'ajuster la position du galet de tension (43) par rapport à la tête d'application (41).

8. Applicateur de ruban adhésif suivant l'une quelconque des revendications précédentes, dans lequel lesdits cylindres (414) sont recouverts d'une couche de protection.

9. Applicateur de ruban adhésif suivant l'une quelconque des revendications précédentes, comprenant également un manche (5) ou une poignée destiné(e) à être raccordé(e) à une extrémité libre du support (40).

10. Procédé de fixation de tubes sur une surface de destination à l'aide d'un applicateur de ruban adhésif selon l'une quelconque des revendications 1 à 9, comprenant les étapes suivantes :
- (a) : placer un rouleau de ruban adhésif sur le dérouleur,
- (b) : dérouler le ruban adhésif pour qu'il vienne en contact avec la tête d'application,
- (c) : déplacer l'applicateur sur la surface de destination selon une ligne transversale aux tubes,
- (d) : répéter l'étape précédente jusqu'à la fixation des tubes sur la surface de destination.
